# EUROPEAN PATENT SPECIFICATION

(11) **EP 0 993 486 B1**
(45) Date of publication and mention of the grant of the patent: **27.08.2003**
(21) Application number: 98932132.8
(22) Date of filing: 08.06.1998
(51) Int. Cl.: C08J 3/14, C08J 3/21, B29B 9/00

(54) **A METHOD OF PRODUCING SYNTHETIC RUBBERS**
VERFAHREN ZUM HERSTELLEN VON SYNTHESEGUMMI
PROCEDE DE PRODUCTION DE CAOUTCHOUCS SYNTHETIQUES

(30) Priority: 23.06.1997 IT MI971478
(43) Date of publication of application: 19.04.2000
(73) Proprietor: VOMM IMPIANTI E PROCESSI S.r.L., 20089 Rozzano (Milano) (IT)
(72) Inventor: VEZZANI, Corrado, I-20146 Milano (IT)
(74) Representative: Ferreccio, Rinaldo
(86) International application number: EP9803416
(87) International publication number: WO98058985

(56) References cited:
- EP-A- 0 538 653
- EP-A- 0 710 670
- WO-A-94/24193
- GB-A- 1 001 040
- US-A- 4 247 441
- US-A- 4 332 760
- US-A- 4 788 231
- PATENT ABSTRACTS OF JAPAN vol. 010, no. 163 (M-487), 11 June 1986 & JP 61 014910 A (MITSUI SEKIYU KAGAKU KOGYO KK), 23 January 1986

## Description

The present invention relates to a method of producing synthetic rubbers particularly, but not exclusively, for the production of tyres.

More specifically, the invention relates to a method of producing both solvent-free synthetic elastomeric mixtures ready for conventional moulding and vulcanization operations, and the so-called masterbatches which have a high content of additives and/or fillers and which are conventionally used to produce the above-mentioned mixtures. Both of these "types" will be referred to in the following description simply as elastomeric mixtures.

It is known that synthetic elastomers such as, for example, polybutadiene, polyisoprene, butyl, and styrene-diene rubbers, etc. are produced by catalytic polymerization of the respective monomers in organic solvents. It is also known that the reaction conditions, the operative parameters of the process, and the catalysts used are selected strictly in relation to the chemical/physical characteristics of the synthetic rubber to be produced. For example, and in particular, it is well known how carefully the catalyst and the operative conditions are selected in order to ensure a predetermined weight ratio of cis/trans isomers in the elastomer produced, the modulus of elasticity of the final product being associated with this ratio.

The elastomer produced is recovered from the polymeric solution by distillation of the solvent in a current of steam. The elastomer thus recovered is free of organic solvent but incorporates up to 50-60% by weight of condensed steam which is generally eliminated by a first treatment on belt driers and subsequent extrusion through suitable dies. A substantially dry, solvent-free elastomeric granulate is thus obtained.

This extrusion step which is generally provided for in the prior art constitutes, for the elastomer, a considerable and recognized mechanical stress resulting in appreciable deterioration of the resilience properties which are achieved with great difficulty in the polymerization step (a substantial reduction in the original modulus of elasticity) apparently due to an increase in the trans isomer content. In order to re-establish the predetermined resilience values of the final rubber, the known technique provides for a suitable addition of natural rubber (100% cis isomer) to the elastomeric granulate when the mixture is formulated.

In addition to the aforementioned disadvantage connected with the extrusion step, a further problem of a technical-economic nature is that at least three separate steps are required to obtain a solvent- and moisture-free elastomeric granulate from the elastomeric solution, that is: distillation in a current of steam, drying, and extrusion, each of which involves the use of respective apparatus with related installation and management costs.

The problem upon which the present invention is based is that of providing a method which enables dry, solvent-free synthetic elastomers to be produced, overcoming the problems mentioned above with reference to the prior art, particularly and above all, those caused by the extrusion step.

This problem is solved, according to the invention, by a method of producing synthetic elastomers in granular form from a solution thereof in at least one organic solvent, characterized in that it comprises the steps of:
- supplying a continuous flow of the solution into a turbo-drier/granulator having a bladed shaft rotated at 400/1200 revolutions/minute,
- dispersing the solution in the form of particles and simultaneously centrifuging it against the internal wall of the turbo-drier/granulator, forming a thin, tubular fluid bed,
- advancing the fluid bed through the turbo-drier/granulator towards the outlet thereof,
- supplying heat to the fluid bed, separating the solvent from the particles of elastomeric solution with the simultaneous formation and growth of granules thereof,
- separating the dry elastomer granulate from the flow of gaseous solvent upon discharge from the turbo-drier/granulator.

In order to supply heat to the fluid bed of particles of elastomeric solution, the internal wall of the turbo-drier/granulator is heated to temperatures of between 80 and 120°. A stream of hot nitrogen (120-140°) supplied to the turbo-drier in the same direction as the flow of elastomeric solution is advantageously used to promote evaporation and removal of the solvent from the solution, as well as the formation of the fluid bed of particles.

The term "turbo-drier/granulator" is intended to define herein apparatus comprising a cylindrical, tubular body, generally arranged with its axis horizontal, closed at its opposite ends, and having inlet openings for the materials and/or substances to be treated and outlet openings for the treated material, and also having a heating jacket for bringing the internal wall to a predetermined temperature, a bladed shaft (or turbine), supported for rotation in the cylindrical, tubular body, having blades disposed in a helical arrangement, and extending radially so as almost to touch the internal wall of the body, and drive means being provided for rotating the bladed shaft at up to 1500-2000 revolutions/minute.

The use of a turbo-drier/granulator produced and marketed by the Applicant has been particularly advantageous for the purposes of the invention.

The methods of operation, the performance and the efficiency of the apparatus of the above-mentioned type (turbo-driers/granulators) are well known.

In the specific case to which the present invention relates, a continuous flow of the elastomeric solution is supplied into the cylindrical, tubular body where it is immediately dispersed, by the bladed shaft which is rotated at 600-1200 revolutions/minute, into particles which are centrifuged against the heated wall of the body to form a thin, tubular fluid bed which is dynamic since it is advanced towards the outlet opening with a "manner" of advance imposed by the orientation of the blades of the bladed shaft.

In the fluid bed, the particles of mixture are kept in a state of constant high turbulence by the mechanical action of the blades by which they are continually thrown against the heated wall. Upon each impact (thermal shock) the temperature of the individual particles increases until it reaches the evaporation temperature of the solvent which can thus be removed therefrom. A stream of hot nitrogen (in the same direction) is advantageously used for this purpose. The advantages connected with the use of the method according to the invention are constituted, first of all, by the considerable simplification achieved in the process as a whole since it is possible to achieve, in a single step, a result which was achieved by at least three successive operative steps with the methods of the prior art. Moreover, the method according to the invention is implemented by extremely compact and versatile apparatus the installation and management costs of which are considerably less than those of the apparatus of the prior art. Finally, by completely avoiding the extrusion step for producing the elastomers in granular form, the method according to the invention enables the elastomers produced to have improved resilience properties since the alterations in the structure of the polymeric chains due to the mechanical stress imposed by the aforesaid extrusion are completely avoided.

The elastomer granulate produced by the above-mentioned method is intended to be sent for subsequent conventional moulding and vulcanization steps, after the addition of suitable additives and/or fillers.

According to the prior art, these steps comprise repeated mechanical treatments, for example, breaking, homogenization and mastication which have the purpose of conferring on the elastomeric mass a plasticity suitable for the incorporation therein, in the most homogeneous manner possible, of all of the additives and/or fillers typically used to prepare mixtures for vulcanization.' Amongst the most commonly-used additives are plasticisers, vulcanizing agents, accelerators, peptizing agents, antioxidants, extending oils, carbon black and colouring fillers.

The aforementioned mechanical treatments are performed in respective devices, for example, extrusion plasticisers (GORDON) and mixers with rollers or closed mixers (BANBURY), and it should be mentioned that the additives are added to the plasticized elastomeric mass in a very precise sequence which is critical for the purposes of the final result.

In addition to operative complexity and difficulties in the control and execution of extemporary interventions during the various operations, as well as substantial consumption of expensive additives, a recognized problem of the prior art is the imperfect and non-homogeneous distribution of the additives and/or fillers in the plasticized elastomeric mass, with the resulting possibility of defects of greater or lesser importance in the final product.

Surprisingly, it has been found that all of the aforementioned problems are overcome by the premixing, into the starting elastomeric solution, of all of the additives and/or fillers preselected for producing the final mixture.

The present invention consequently also relates to a method of producing an elastomeric mixture from a solution of at least one synthetic elastomer in one or more solvents, the mixture having a predetermined composition comprising at least one synthetic elastomer and one or more additives and/or fillers conventionally used in the rubber industry, characterized in that it comprises, basically, the steps of:
- intimately mixing the elastomeric solution with the additives and/or fillers of the predetermined composition of the mixture to be produced,
- removing the solvent from the mixture thus obtained, and
- granulating the mixture to produce dry, solvent-free granules, each of which has a composition substantially identical to the predetermined mixture composition; characterized in that the steps of removing the solvent and granulating the mixture take place whilst the mixture is kept in a turbulent fluid-bed condition simultaneously in a turbo-drier/granulator.

Since each mixture particle comprises a respective quantity of vulcanizing agent in due proportion, the temperature of the particles inside the turbo-drier must not reach the vulcanization temperature. It has been found that wall temperatures of 80-120° and nitrogen temperatures of 120-140° are optimal for this purpose.

With the above-mentioned temperature values and rate of rotation of the bladed shaft, it has been found possible to treat continuous flows of mixture (elastomeric solution/solvents/additives) with flowrates of 5000-8000 kg/hour, with periods of 60-90 seconds spent in the turbo-drier, and with the production of a granulate which is discharged at a temperature of 30°-40°C.

The composition of the "elastomeric mixture granulate" thus produced is statistically so satisfactory that it can be sent as it is directly (for example, pneumatically) to the moulding and vulcanization presses.

The organic solvent discharged from the turbo-drier can be recovered by conventional techniques and re-used for the polymerization reaction.

The optimal results of the method of the invention are closely correlated with the way in which the ingredients and fillers are pre-mixed in the elastomeric solution. The more homogeneous and intimate this mixing is, the better the "composition" of each individual granule of mixture conforms to the predetermined and desired composition.

For this purpose, it has been found particularly advantageous to use turbine mixers and, more particularly, those known as TURBOMIXERS, which are structurally similar to the turbo-driers described above and, like the turbo-driers, are produced by the Applicant and marketed with the trade mark TURBOMIXER.

The advantages of the invention.
- Clearly, both plant and operation are very greatly simplified. In fact, it suffices to bear in mind that, by carrying out only two operative steps (mixing plus drying/granulation), and hence with the use of apparatus comprising only 2-3 small and very efficient machines, for example, Vomm turbomixers and turbo-driers/granulators, it is possible to produce rubber mixtures ready for moulding and vulcanization, for which the prior art required the installation of large, complex plants which were not easy to operate and control, and which involved the use of many skilled workers.
- The premixing of the preselected additives and/or fillers with the solution of elastomers in organic solvents is performed in viscous fluid conditions; this ensures optimal homogenization of the mixture which, when carried out by a TURBOMIXER, achieves levels of "intimacy" comparable with filming of the individual particles of fillers and additives with the elastomeric solution. The results in the final product are considerably better than those achieved by the prior art in which, precisely because of the dry mixing, the polymer chains were subjected to fatigue stressing and hence chain breakage because of the powerful mechanical action of Banbury-type mixers.
- The high degree of homogenization reached in the aforementioned premixing permits usage and consumption of reduced quantities of additives, particularly of peptizing agents which, in the methods of the prior art, necessarily have to be used in considerable quantities to facilitate the mastication step and the subsequent incorporation of other additives.
- The production of an elastomeric mixture in granular form ready for use provides a material which is much easier to handle than the "loaves" of the prior art; this permits the use of considerably simplified apparatus, which can be controlled easily and safely to the extent that the need for personnel is reduced or even eliminated.
- Surprisingly, the granules of elastomeric mixture produced have better resilience characteristics than those of conventional mixtures. The modulus of elasticity values displayed in many tests performed on granules of the mixture of the invention permit the hypothesis that the length of the chains which the elastomers had in the starting solution is not in any way reduced during the solvent-removal and granulation steps and that their content of cis isomers is not only not reduced but is even increased. Although the above-mentioned chemico-physical mechanism is not fully explained, it is thought that this may occur as a result of the "supply" of large quantities of mechanical energy, by means of the bladed shaft, to the very small mixture particles which constitute the fluid bed generated by the shaft.

This surprising result may, if confirmed, also involve a whole series of advantages for polymerization reactions, for the catalysts used and for the operative parameters, as will be clear to experts in the art.

The advantages and characteristics of the invention will become clearer from an embodiment of the method of the invention described by way of nonlimiting example with reference to apparatus shown schematically in the appended drawings.

In the drawings:
Figure 1 shows schematically a turbo-drier/granulator used for producing solvent-free, granulated elastomers according to the method of the invention, and
Figure 2 shows apparatus for producing a granulated elastomeric mixture.

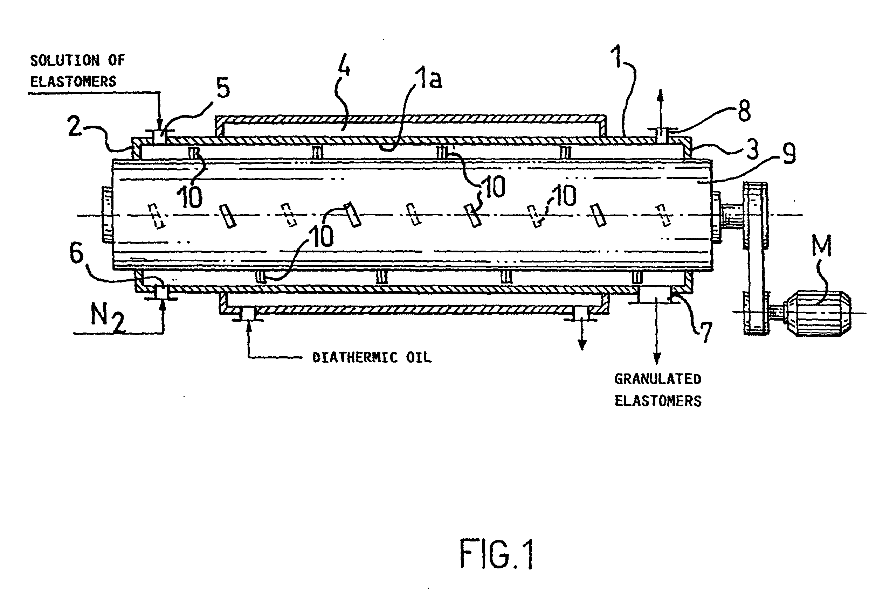

With reference to Figure 1, a turbo-drier/granulator used to implement the method according to the invention comprises, basically, a cylindrical, tubular body 1 closed at its opposite ends by walls 2, 3 and having a coaxial heating jacket 4 through which a fluid, for example, diathermic oil, is intended to flow to keep the internal wall 1a of the body 1 at a predetermined temperature.

The tubular body 1 has inlet openings 5, 6 for the solution of elastomers in at least one organic solvent, and for hot nitrogen, respectively, as well as outlet openings 7 and 8 for the elastomers in granule form and for the organic solvents in the gaseous state, respectively.

A bladed shaft 9 supported for rotation in the tubular body 1 has blades 10 arranged helically and oriented for centrifuging the elastomeric solution and the granulate gradually formed therefrom and simultaneously urging them towards the outlet. A motor M is provided for driving the bladed shaft 9 at speeds variable from 600 to 1200 revolutions/minute or more.

### Example 1

150 1/h of a solution of butadiene/styrene copolymer in cyclohexane in a ratio of 1:1 by weight was supplied continuously into the turbo-drier 1 in which the bladed shaft 9 was rotated at a speed of 1000 revolutions/minute and in which the internal wall 1a was kept at a temperature of 120°. At the same time, a stream of nitrogen was supplied through the opening 6, in the same direction, at 140°C, with a flow rate of 300 Nm³/h.

Immediately upon admission to the turbo-drier 1, the flow of copolymer solution was divided mechanically into particles which were centrifuged against the internal wall 1a of the turbo-drier and formed a thin, annular fluid bed which was dynamic since it was moved continuously towards the outlet 7. The heat supplied to the fluid bed by the internal wall of the turbo-drier and by means of the hot nitrogen brought about progressive removal of the cyclohexane with the simultaneous formation of growing granules. After a period of about 60 seconds spent in the turbo-drier, a butadiene/styrene copolymer granulate substantially free of cyclohexane and having a mean temperature of 35-37°C was discharged continuously from the opening 7.

### Example 2

One hundred and thirty kilos/hour of a solution of polyisoprene in N-hexane (ratio 1:2 by weight) was supplied continuously into a turbo-drier 1 and a stream of hot nitrogen was simultaneously supplied at a temperature of 120°C with a flow-rate of 250 Nm³/h.

The wall temperature was regulated to a value of about 100° and the bladed shaft 9 was rotated at a constant speed of 800 revolutions/minute.

After a period of about 60 seconds spent in the turbo-drier, a polyisoprene granulate substantially free of hexane and having a temperature of 32-33°C was discharged continuously therefrom.

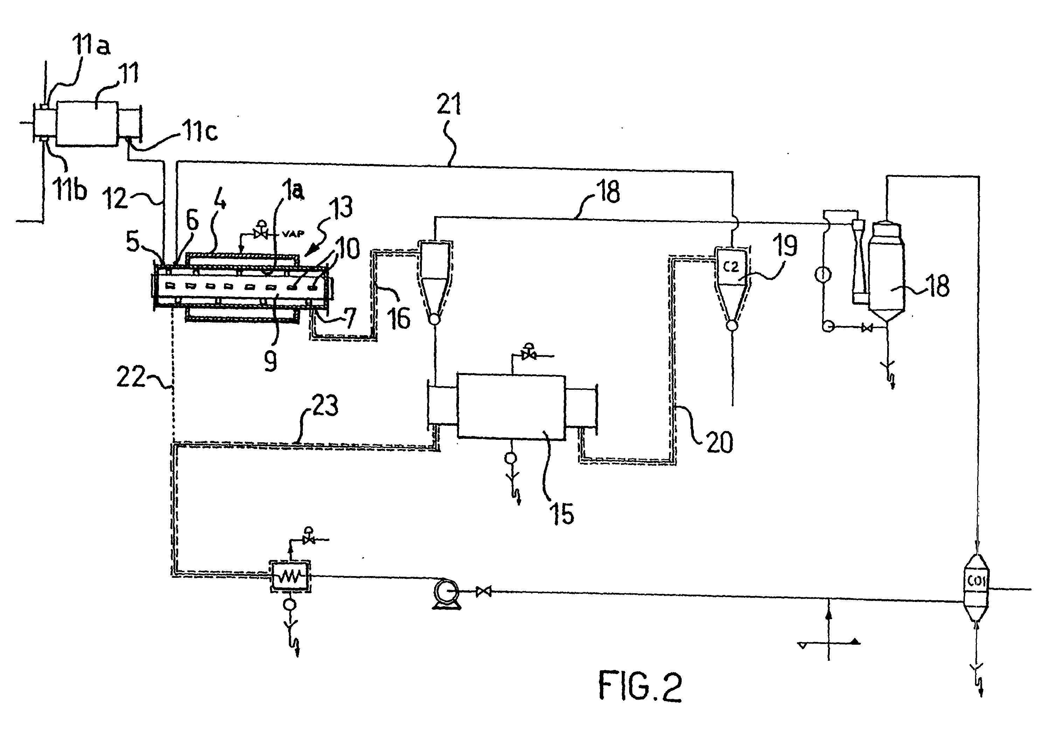

With reference to Figure 2, apparatus for producing the granular elastomeric mixture according to the invention comprises a turbine mixer 11 (particularly and advantageously a Vomm turbomixer) with inlet openings 11a, 11b for mixture additives and/or fillers and for elastomeric solution, respectively, and an outlet opening 11c connected by means of a pipe 12 to a first turbo-drier/granulator 13.

The turbo-drier 13 is exactly the same as the turbo-drier described with reference to Figure 1.

The turbo-drier/granulator 13 is connected, with the interposition of a gas-separation cyclone 14, to a second turbo-drier 15 of identical structure, the connections being indicated schematically by pipes 16, 17.

A scrubber 18 is disposed in the gas-discharge pipe from the cyclone 14 and a second solid-gas separation cyclone 19 is disposed in the discharge pipe 20 of the turbo-drier 15.

The gas discharged from the cyclone 19 is recycled by means of a pipe 21 to one of the inlet openings of the turbo-drier 13.

Hot nitrogen may be supplied to the turbo-driers 13 and 15 by means of respective pipes 22 and 23.

### Example 3

A flow of a solution of butadiene-styrene copolymer (SBR) in cyclohexane containing the copolymer in a ratio of 1:1 by weight relative to the cyclohexane was supplied at a flow-rate of 4800 kg/hour into the turbomixer 11 into which a continuous flow constituted by the following additives given in percentages by weight was simultaneously also supplied: 0.67% of benzothiazyl-2-cyclohexyl-sulfenamide, 0.33% tetramethylthiuram disulphide, 2.5% sulphur, 0.9% paraffin wax, 67.1% carbon black, 6.7% zinc oxide, 16.8% highly aromatic mineral oil, 5% stearic acid. The flow-rate of this second flow of additives was 2800 kg/hour.

Upon discharge from the turbomixer 11, the highly homogeneous mixture was supplied continuously to the inlet of the first turbo-drier/granulator 13 simultaneously with a stream of nitrogen heated to 120°C and having a flow-rate of 300 Nm³/hour.

The wall temperature of the turbo-drier was regulated to a value of about 80°C and the speed of the bladed shaft was kept constantly at 1000 revolutions/minute.

Immediately upon admission to the turbo-drier 12, the flow of mixture was divided mechanically into very small particles which were centrifuged against the heated inner wall and formed a thin, tubular fluid bed. The blades of the bladed shaft advanced the fluid bed towards the outlet of the turbo-drier with a predetermined manner of movement.

The stream of hot nitrogen easily permeated the fluid bed, removing therefrom the solvent or solvents which gradually evaporated from the particles of mixture. Simultaneously with this evaporation, very small "granules" of mixture started to form and these gradually grew as they moved towards the outlet of the turbo-drier.

After a period of about 60 seconds spent in the turbo-drier, a solid-gas flow was discharged therefrom and supplied to the cyclone 14 where the gas (hot nitrogen plus solvent) was separated from the solid (small granules of mixture).

The flow of granules discharged from the cyclone 14 was supplied through the pipe 17 to the second turbo-drier/granulator 15 into which a stream of hot nitrogen was simultaneously admitted at a temperature of 80°C and with a flow-rate of 300 m³/hour.

The removal of the solvent and the formation of granules of elastomeric mixture was completed in this second turbo-drier 15, in which the conditions of inner wall-temperature and speed of rotation of the bladed shaft were substantially the same as those of the turbo-drier 13. The gas-free granules were discharged at a temperature of 34-35°C from the cyclone 19 disposed downstream and could be transported directly to the moulding and vulcanization presses, whereas the hot nitrogen was recycled through the pipe 21 to the first turbo-drier 13. Upon commencement of this recycling of nitrogen, the direct supply of nitrogen to the turbo-drier 13 was automatically stopped.

Many variations and modifications may be applied to the implementation of the method of the invention.

Thus, for example, the solvent-removal step may be performed under vacuum, avoiding the use of a stream of hot gas.

Moreover, the use of a single turbo-drier of suitable size for the removal of the solvent and the simultaneous formation of the granules of mixture may be envisaged.

## Claims

1. A method of producing an elastomeric mixture from a solution of at least one synthetic elastomer in one or more organic solvents, the mixture having a predetermined composition comprising the at least one synthetic elastomer and one or more additives and/or fillers conventionally used in the rubber industry, which comprises the steps of;
- intimately mixing the elastomeric solution with the additives and/or fillers of the predetermined composition of the mixture to be produced;
- removing the solvent from the mixture thus obtained, and
- granulating the mixture to produce dry, solvent-free granules, each of which has a composition substantially identical to the predetermined mixture composition;
**characterized in that** the steps of removing the solvent and granulating the mixture take place whilst the mixture is kept in a turbulent fluid-bed condition simultaneously in at least one turbo-drier/granulator.

2. A method according to claim 1, **characterized in that** the steps of removing the solvent and granulating the mixture are carried out with the supply of heat to the turbulent fluid-bed condition.

3. A method according to claim 1, **characterized in that** the steps of removing the solvent and granulating the mixture are carried out under vacuum.

4. A method according to claim 1, **characterized in that** the turbo-drier/granulator has an internal wall temperature of between 80 and 120°C.

5. A method according to claim 2, **characterized in that** a stream of hot nitrogen supplied into the turbo-drier/granulator is used for the solvent-removal step.

6. A method of producing synthetic elastomers in the form of granules from solutions thereof in at least one organic solvent, **characterized in that** it comprises the steps of:
- supplying a continuous flow of the solution into a turbo-drier/granulator having a bladed shaft rotated at 400/1200 revolutions/minute,
- dispersing the solution in the form of particles and simultaneously centrifuging it against the internal wall of the turbo-drier/granulator, forming a tubular fluid bed,
- advancing the fluid bed through the turbo-drier/granulator towards the outlet thereof,
- supplying heat to the fluid bed, separating the solvent from the particles of elastomeric solution with the simultaneous formation and growth of granules thereof,
- separating the dry elastomer granulate from the flow of gaseous solvent upon discharge from the turbo-drier/granulator.

7. Apparatus for producing elastomeric mixtures in granular form from respective elastomeric solutions, **characterized in that** it comprises:
- a turbine mixer (11) having inlet openings (11a, 11b) for the mixture additives and/or fillers and for elastomeric solution, respectively, and at least one outlet opening 11c for the mixture produced,
- at least one turbo-drier/granulator (13, 15) connected to the mixer (11) by means of a pipe (12) and having inlet openings (5,6) for the materials to be treated and at least one outlet opening (7) for the treated material,
- a gas-separation cyclone (14) in communication with the outlet opening (7) of the turbo-drier granulator (13);
- a pipe (21) for recycling the gas discharged from the cyclone (14) to the inlet of the turbo-drier/granulator (13).

8. Apparatus according to Claim 7, **characterized in that** it comprises a second turbo-drier/granulator (15) supplied by the gas-separation cyclone (14) and having an outlet opening (20) in communication with a second gas-separation cyclone (19).

## Patentansprüche

1. Verfahren zur Herstellung einer Elastomermischung aus einer Lösung von wenigstens einem synthetischen Elastomer in ein oder mehreren organischen Lösungsmitteln, wobei die Mischung eine vorgewählte Zusammensetzung aufweist, die wenigstens ein synthetisches Elastomer und ein oder mehrere üblicherweise in der Kautschukindustrie verwendete Additive und/oder Füllstoffe umfaßt, welches die Schritte umfaßt:
- inniges Mischen der Elastomerlösung mit den Additiven und/oder Füllstoffen der vorgewählten Zusammensetzung der herzustellenden Mischung;
- Entfernen des Lösungsmittels aus der so erhaltenen Mischung, und
- Granulieren der Mischung zur Herstellung von trockenen, lösungsmittelfreien Granalien, von denen jede eine Zusammensetzung aufweist, die mit der vorgewählten Mischungszusammensetzung im wesentlichen identisch ist;
**dadurch gekennzeichnet, daß** die Schritte des Entfernens des Lösungsmittels und des Granulierens der Mischung stattfinden, während die Mischung gleichzeitig in wenigstens einem Turbotrockner/Granulator in einem turbulenten Wirbelschichtzustand gehalten wird.

2. Verfahren nach Anspruch 1, **dadurch gekennzeichnet, daß** die Schritte des Entfernens des Lösungsmittels und des Granulierens der Mischung unter Zufuhr von Wärme zum turbulenten Wirbelschichtzustand durchgeführt werden.

3. Verfahren nach Anspruch 1, **dadurch gekennzeichnet, daß** die Schritte des Entfernens des Lösungsmittels und des Granulierens der Mischung unter Vakuum durchgeführt werden.

4. Verfahren nach Anspruch 1, **dadurch gekennzeichnet, daß** der Turbotrockner/Granulator eine Innenwandtemperatur zwischen 80 und 120°C hat.

5. Verfahren nach Anspruch 2, **dadurch gekennzeichnet, daß** ein in den Turbotrockner/Granulator geleiteter Strom heißer Stickstoff für den Schritt des Entfernens des Lösungsmittels verwendet wird.

6. Verfahren zur Herstellung synthetischer Elastomere in Form von Granalien aus Lösungen davon in wenigstens einem organischen Lösungsmittel, **dadurch gekennzeichnet, daß** es die Schritte umfaßt:
- Zuführen eines kontinuierlichen Stroms der Lösung in einen Turbotrockner/Granulator mit einer Welle mit Schaufeln, die sich mit 400/1200 Umdrehungen/Minute dreht,
- Dispergieren der Lösung zu Partikeln und gleichzeitiges Zentrifugieren gegen die Innenwand des Turbotrockners/Granulators unter Bildung einer rohrförmigen Wirbelschicht,
- Vorwärtsbewegen der Wirbelschicht durch den Turbotrockner/Granulator in Richtung von dessen Auslaß,
- Zuführen von Wärme zu der Wirbelschicht, Abtrennen des Lösungsmittels von den Elastomerlösungspartikeln unter gleichzeitiger Bildung und gleichzeitigem Wachstum von Granalien davon,
- Abtrennen des trockenen Elastomergranulats aus dem Strom von gasförmigem Lösungsmittel nach Ablassen aus dem Turbotrockner/Granulator.

7. Vorrichtung zur Herstellung von Elastomermischungen in granulierter Form aus entsprechenden Elastomerlösungen, **dadurch gekennzeichnet, daß** sie umfaßt:
- einen Turbinenmischer (11) mit Einlaßöffnungen (11a, 11b für die Mischungsadditive und/oder Füllstoffe bzw. die Elastomerlösung und wenigstens eine Auslaßöffnung (11c) für die erzeugte Mischung,
- wenigstens einen Turbotrockner/Granulator (13, 15), der mit dem Mischer (11) mittels einer Rohrleitung (12) verbunden ist und Einlaßöffnungen (5, 6) für die zu behandelnden Materialien und wenigstens eine Auslaßöffnung (7) für das behandelte Material aufweist,
- einen Zyklon zur Gasabscheidung (14) in Verbindung mit der Auslaßöffnung (7) des Turbotrockners/Granulators (13),
- eine Rohrleitung (21) zum Rückführen des aus dem Zyklon (14) abgelassenen Gases in den Einlaß des Turbotrockners/Granulators (13).

8. Vorrichtung nach Anspruch 7, **dadurch gekennzeichnet, daß** sie einen zweiten Turbotrockner/Granulator (15) umfaßt, der durch den Zyklon zur Gasabscheidung (14) versorgt wird und eine Auslaßöffnung (20) in Verbindung mit einem zweiten Zyklon zur Gasabscheidung (19) aufweist.

## Revendications

1. Méthode de production d'un mélange d'élastomères à partir d'une solution composée d'au moins un élastomère synthétique dans un ou plusieurs solvants organiques, le mélange ayant une composition prédéterminée comprenant au moins ledit élastomère synthétique et un ou plusieurs additifs et/ou matériaux de remplissage utilisés de manière traditionnelle dans l'industrie du caoutchouc, qui comprend les étapes suivantes :
- le mélange intime de la solution d'élastomère avec les additifs et/ou les matériaux de remplissage de la composition prédéterminée du mélange à produire,
- l'extraction du solvant du mélange ainsi obtenu, et
- la granulation du mélange afin de produire des granules secs et sans solvant, chacun d'entre eux ayant une composition essentiellement identique à la composition prédéterminée du mélange,
**caractérisée en ce que** les étapes d'extraction du solvant et de granulation du mélange sont réalisées alors que le mélange est simultanément maintenu sous la condition de lit fluidisé agité dans au moins un turbo-séchoir/granulateur.

2. Méthode selon la revendication 1, **caractérisée en ce que** les étapes d'extraction du solvant et de granulation du mélange sont réalisées avec apport de chaleur à la condition de lit fluidisé agité.

3. Méthode selon la revendication 1, **caractérisée en ce que** les étapes d'extraction du solvant et de granulation du mélange sont réalisées sous vide.

4. Méthode selon la revendication 1, **caractérisée en ce que** le turbo-séchoir/granulateur présente une température de paroi interne comprise entre 80 et 120°C.

5. Méthode selon la revendication 2, **caractérisée en ce qu'**un courant d'azote chaud apporté au turbo-séchoir/granulateur est utilisé pour l'étape d'extraction du solvant.

6. Méthode de production d'élastomères synthétiques sous forme de granulés à partir de solutions diluées dans au moins un solvant organique, **caractérisé en ce qu'**elle comprend les étapes de :
- apport d'un flux continu de solution dans un turbo-séchoir/granulateur muni d'un arbre à lames tournant à 400/1200 tours/minute,
- dispersion de la solution sous forme de particules et simultanément centrifugation de celle-ci contre la paroi interne du turbo-séchoir/granulateur, formant une couche fluide tubulaire,
- avancement du lit fluidisé à travers le turbo-séchoir/granulateur vers la sortie de celui-ci,
- apport de chaleur au lit fluidisé, séparation entre le solvant et les particules de solution élastomère avec simultanément la formation et la croissance des granulés,
- séparation des granulés secs d'élastomère et du flux de solvant gazeux au déchargement du turbo-séchoir/granulateur.

7. Equipement pour produire des mélanges élastomères sous forme granulaire à partir de leurs solutions élastomères respectives, **caractérisé en ce qu'**il comprend,
- un mélangeur à turbine (11) ayant des orifices d'entrée (11a, 11b) destinées respectivement aux additifs et/ou aux matériaux de remplissage de la solution élastomère et au moins un orifice de sortie (11c) destiné au mélange produit,
- au moins un turbo-séchoir/granulateur (13, 15) connecté au mélangeur (11) par un tuyau (12) et muni d'orifices d'entrée (5, 6). pour les matériaux à traiter et d'au moins un orifice de sorite (7) pour les matériaux traités,
- un cyclone de séparation de gaz (14) en communication avec l'orifice de sortie (7) du turbo-séchoir/granulateur (13),
- un tube (21) pour recycler les gaz déchargés à partir du cyclone (14) vers l'entrée du turbo-séchoir/granulateur (13).

8. Equipement selon la revendication 7, **caractérisé en ce qu'**il comprend un deuxième turbo-séchoir/granulateur (15) alimenté par le cyclone séparateur de gaz (14) et muni d'un orifice de sortie (20) en communication avec un deuxième cyclone séparateur de gaz (19).
